# EUROPEAN PATENT SPECIFICATION

(11) **EP 2 757 892 B1**
(45) Date of publication and mention of the grant of the patent: **25.11.2015**
(21) Application number: 12751335.6
(22) Date of filing: 27.08.2012
(51) Int. Cl.: A23F 3/14, A23F 3/16

(54) **A PROCESS FOR PREPARATION OF A TEA PRODUCT**
HERSTELLUNGSVERFAHREN FÜR EIN TEEPRODUKT
PROCÉDÉ POUR PRÉPARATION D'UN PRODUIT DE THÉ

(30) Priority: 23.09.2011 IN MM26972011
(43) Date of publication of application: 30.07.2014
(73) Proprietor: Unilever N.V., 3013 AL Rotterdam (NL); Unilever PLC, a company registered in England and Wales under company no. 41424 of, London EC4Y 0DY (GB)
(72) Inventor: BASAVARAJU, Lokesh, Whitefield Bangalore 560 066 (IN); GUTTAPADU, Sreeramulu, Whitefield Bangalore 560 066 (IN); MUTAI, Felix Kipkorir, Kericho 20200 (KE); NARAYANAN, Venkatraj Venkatrao, Whitefield Bangalore 560 066 (IN)
(74) Representative: Askew, Sarah Elizabeth
(86) International application number: PCT/EP2012/066611
(87) International publication number: WO 2013/041329

(56) References cited:
- WO-A2-2009/059927
- US-A1- 2008 107 774
- US-A1- 2008 193 626
- KARAK T ET AL: "Trace elements in tea leaves, made tea and tea infusion: A review", FOOD RESEARCH INTERNATIONAL, ELSEVIER APPLIED SCIENCE, BARKING, GB, vol. 43, no. 9, 1 November 2010 (2010-11-01), pages 2234-2252, XP027389090, ISSN: 0963-9969 [retrieved on 2010-08-27]
- SHU W S ET AL: "Fluoride and aluminium concentrations of tea plants and tea products from Sichuan Province, PR China", CHEMOSPHERE, PERGAMON PRESS, OXFORD, GB, vol. 52, no. 9, 1 September 2003 (2003-09-01), pages 1475-1482, XP002642438, ISSN: 0045-6535, DOI: 10.1016/S0045-6535(03)00485-5 [retrieved on 2003-06-19]
- WALTER FELDHEIM ET AL: "Investigation of the presence and significance of theanine in the tea plant", JOURNAL OF THE SCIENCE OF FOOD AND AGRICULTURE, WILEY & SONS, CHICHESTER, GB, vol. 37, no. 6, 1 January 1986 (1986-01-01), pages 527-534, XP009144741, ISSN: 0022-5142

## Description

The present invention relates to a process for preparing a tea product, particularly a process for preparing of a tea product with enhanced levels of theanine and low levels of aluminum.

### Background and prior art

Theanine is a non-protein amino acid reported to be present in tea and known to provide several health benefits. Theanine, when consumed in adequate (>50 mg) quantity induces α-waves in the brain to achieve a relaxed but alert mental state via a direct influence on the central nervous system (Nobre AC, Rao A., Owen GN. Asia Pac J Clin Nutr. 2008; 17 (SI): 167-168). Theanine constitutes up to 50% of the total amino acids in tea and is known to contribute to umami taste. L-theanine has also been shown to promote mental and physical relaxation, decrease stress and anxiety without inducing drowsiness and also enhanced immunity (Juneja, L.R., Chu, D., Okubo, T. Trends in Food Sci. and Tech. 1999; 10: 199-204, Haskell CF, Kennedy DO, Milne AL, Wesnes KA and Scholey AB. Biol Psychol 2008; 77 (2): 113-122). Due to the wide variation in theanine content across commercially available teas, it is difficult to deliver desirable amounts consistently for the benefit of the consumer.

There have been attempts to enhance theanine levels in tea products either by adding exogenous theanine to the tea or by mixing theanine enriched tea fractions.

Tea is a plant species which is known to accumulate large amount of aluminum. A high level of aluminum in food stuffs is not desirable due to its toxicity. Attention was first drawn to the potential role of aluminum as a toxic metal over 50 years ago. Aluminum toxicity in some patients is reported to lead to chronic renal failure, toxic phenomena, dialysis encephalopathy, osteomalacic dialysis osteodystrophy, and anemia. Aluminum has also been implicated as a toxic agent in the etiology of Alzheimer's disease, Guamiam amyotrophic lateral sclerosis, and parkinsonism-dementia (Hewitt C.D., Savory J., Wills M.R. Aspects of aluminum toxicity. Clin Lab Med (1990 Jun) 10(2):403-22). Aluminium neurotoxicity issues have been reviewed in detail (Strong M.J., Garruto R.M., Joshi J.G., Mundy W.R., Shafer T.J. Can the mechanisms of aluminum neurotoxicity be integrated into a unified scheme? J Toxicol Environ Health (1996 Aug 30) 48(6):599-613).

US 2008/0193626 (Unilever) discloses a process for manufacturing amino acid-rich tea or tea extract. The process uses a tea starting material comprising at least 50% of tea plant material harvested within 3 hours before or after sunrise which is then processed in a conventional tea process and packaged to provide a vendible tea product comprising at least 50% of tea plant material harvested within 3 hours before or after sunrise. Harvesting near to sunrise gives rise to a tea which is naturally high in amino acids. However harvesting at such periods is difficult in practice.

US 2008/0107774 (Unilever) discloses a process of making tea with high theanine content. In this process leaf and stem material are processed separately for making tea. It is reported that the stem material contains higher levels of theanine.

US 2007/0248737 (Unilever) discloses a process of preparing a tea product with an enhanced level of theanine. This process comprises the steps of contacting tea leaf and/or shoot with a theanine precursor which gives rise to the higher theanine content in the product.

WO 2009/059927 (Unilever) describes various tea products, including tea juice, which contain theanine in specific concentrations.

None of the prior art concerns a process for producing a tea product with enhanced levels of theanine and lower levels of aluminum.

Therefore there is a need to provide a process for the preparation of tea with enhanced levels of theanine and lower levels of aluminum in a natural manner without requiring any particular time of harvesting and without addition of any exogenous chemical substance.

### Object of the invention

In view of the foregoing it is an object of the present invention to provide a tea product with higher levels of theanine.

It is another object of the present invention to provide a tea product with lower levels of aluminum.

It is a further object of the present invention to provide a process for making a tea product with an enhanced level of theanine and a lower level of aluminum.

The present inventors have surprisingly found that selecting tea material with a particular shoot length during the rejuvenation stage after prunning and further processing it provides a tea product with significantly higher levels of theanine and lower levels of aluminum. The present inventors have also found that additional treatment of this tea material with an alkaline agent further reduces the aluminum content.

### Summary of the invention

Accordingly, in a first aspect, the present invention provides a process for the preparation of a tea product made from a tea leaf characterized in that the tea leaf comprises at least 40% by weight of tea material which is harvested during the rejuvenation stage of tea bushes after pruning with a shoot length of 6-16 cm and having 750 - 1200 shoots per kg of the tea leaf.

A second aspect of the invention provides a leaf tea product comprising:
a) 150 - 900 mg of aluminum per kg of tea product; and
b) 0.75 - 4 % of theanine on a dry weight basis.

A third aspect of the invention provides a liquid tea juice comprising;
a) 50 - 250 ppm of aluminum; and
b) 3 - 6 mg of theanine per mL.

These and other aspects, features and advantages will become apparent to those of ordinary skill in the art from a reading of the following detailed description. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The present invention provides a process for the preparation of a tea product made from a tea leaf characterized in that the tea leaf comprises at least 40% by weight of tea material which is harvested during the rejuvenation stage of tea bushes after pruning with a shoot length of 6-16 cm and having 750 - 1200 shoots per kg of the tea leaf.

### Pruning

Pruning is commonly practiced in tea plantations. Pruning refers to cutting of the branches of matured tea bushes manually or mechanically (e.g. by hard knife or by high speed rotating disk) at a predetermined height.

Generally there are five types of pruning which are carried out at different heights of the tea bush. Rejuvenation pruning is generally done at a height of less than 30 cm from the ground, hard pruning is done typically at a height of 30-45 cm from the ground, medium pruning is done at a height of 45-60 cm from the ground, light pruning is done at a height of 60-65 cm from the ground and skiffing is generally done at a height of greater than 65 cm from the ground. Mature tea plants in a plantation are typically 80-90 cm in height from the ground. This level is maintained by regular plucking.

Pruning is usually carried out in a tea plantation for one or more of the following reasons: (a) to maintain a convenient height for plucking; (b) to induce more vegetative growth; (c) to minimize banji formation; (d) to control the crop during a rush period; (e) to achieve better crop distribution; (f) to economize plucking cost; (g) to remove dead and defunct wood; (h) to develop new frame; (i) to remove knots and interlocked branches; and (j) to rejuvenate the overall tea bush. Rejuvenation pruning is generally carried out in a field where 50% of the primary branches are affected by wood rot / canker. Tea bushes are normally rested for about 6 weeks prior to pruning. Hard pruning is carried out for proper spread of the bushes, whenever the secondary branches are weak and knotty. Medium and light pruning is carried out when bush frames are healthy. Skiffing is normally carried out to postpone pruning and for better frame development.

The length of the pruning cycle depends on several factors, e.g. the altitude of the garden, yield trend and plucker utilization. Commonly one quarter of the plantation is recommended to be pruned for a sustainable tea crop during the year. Prior to pruning, tea bushes should have adequate starch reserves for quick recovery of bushes. After pruning, it typically takes 3-4 months for the tea bush for complete rejuvenation and to be ready for commercial plucking which is carried out generally at a height greater than 75 cm from the ground.

### Tea material

The term tea material as used herein means the tea material which is harvested during the rejuvenation stage of a tea bush after pruning with a shoot length of 6-16 cm and having 750 - 1200 shoots per kg of the tea leaf. The fresh tea leaf may be obtained from *Camellia sinensis var. sinensis* and/or *Camellia sinensis var. assamica.*

The preferable length of the shoot is in between 8 - 16 cm and more preferably 10 - 16 cm. The tea material comprises preferably 800 - 1100, more preferably 900-1000 shoots per kg.

The tea product of the invention is made from a tea leaf characterized in that the tea leaf comprises at least 40% by weight of tea material as defined above. Preferably the tea leaf comprises at least 50%, more preferably at least 60% and even more preferably at least 70%, 80% or 90% by weight of the tea material. Most preferably 100% of the tea leaf is the tea material as defined above.

The tea material as defined above is obtained from a tea plant within 7 months from pruning, more preferably within 6 months, most preferably within 5 months from pruning.

Different kinds of product can be made using the invention e.g. leaf tea products (e.g. green tea, black tea, oolong tea), tea juice and tea-based beverages etc.

The leaf tea product of the present invention comprises: (a)150 - 900 mg of aluminum per kg of tea product; and (b) 0.75 - 4 % of theanine on a dry weight basis.

Preferably the leaf tea product comprises 250-800 mg and more preferably 400 - 700 mg of aluminum per kg of tea product. Similarly the leaf tea product preferably comprises 1 - 4% and more preferably 2- 4 % of theanine on a dry weight basis.

The leaf tea product is preferably a green leaf tea product, a black leaf tea product or even an oolong tea product, or mixtures thereof.

The present invention also provides a liquid tea juice comprising (a) 10 - 200 ppm of aluminum; and (b) 3 - 6 mg of theanine per mL.

Preferably the liquid tea juice comprises 10 - 175 ppm and more preferably 10 - 150 ppm of aluminum. Similarly the liquid tea juice preferably comprises 3.5 - 6 mg of theanine and more preferably 4 - 6 mg per mL.

In one of the preferred embodiments the present invention provides a tea-based beverage comprising the tea juice of the invention wherein the beverage has a total aluminum content of less than 9 ppm and a theanine content of 0.03 - 0.65 mg per mL of beverage.

The tea-based beverage of the invention has more preferably a total aluminum content of less than 8ppm and even more preferably less than 7 ppm. Also the more preferable theanine content of the tea-based beverage of the invention is in between 0.03 - 0.5 mg, further more preferably in between 0.03 - 0.4 mg and most preferably in between 0.03 - 0.35 mg per mL.

### Processing of the tea leaf to obtain a green leaf tea product

In one embodiment, process comprises a step of thermal deactivation of the enzymes of the tea leaf to obtain green leaf tea. The thermal deactivation is preferably carried out by a drying process. The tea leaf after plucking is subjected to drying to prevent fermentation, which stops any enzyme activity that causes oxidation.

### Processing of the tea leaf to obtain a black leaf tea product

In another embodiment, the process comprises the steps of (a) subjecting the tea leaf to Crush, Tear and Curl or rolling, (b) fermentation of the tea leaf, and (c) drying the tea leaf to obtain black tea. Optionally the tea leaf is withered before Crush, Tear and Curl or rolling.

Black tea production involves the following steps: (i) fresh leaves of the plant are withered. Withering is a process where the plucked tea leaves are allowed to lose moisture in a shallow trough where biochemical reactions occur causing the formation of many beneficial compounds including aroma compounds. (ii) The withered leaves are then macerated which is a process where the tea cellular structure is broken causing further biochemical reactions to occur. (iii) The macerated leaves are then fermented which is a process in which enzymes in the tea leaf use atmospheric oxygen to oxidise various substrates to produce coloured products. (iv) Finally the fermented leaves are then dried at high temperatures to stop the enzyme activity and bring down the moisture to preferably less than 8 - 10% to produce the black tea.

### Processing of the tea leaf to obtain liquid tea juice

In one of the embodiment, the process for the preparation of a tea product comprises the step of squeezing out juice from the tea leaf to produce leaf residue and tea juice.

It is particularly preferred that the fresh tea leaves comprise material from var. assamica as this variety naturally has a high level of tea actives and so leads to a high level of actives in the leaf residue even after removal of the juice.

The amount of expressed juice is preferably at least 50 mL per kg of the fresh tea leaves. The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. Alternatively, the juice and the leaf residue may separated by filtration or centrifugal separation.

The juice may be obtained from the fresh leaves in a single pressing or in multiple pressings of the fresh leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5- 40 °C, more preferably 10-30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes. Prior to expression, the fresh tea leaves may undergo a pre-treatment including, for example, a unit process selected from maceration, withering, fermentation or a combination thereof. If the leaves are fermented prior to expression then it is particularly preferred that they are macerated prior to fermentation.

### Making the tea-based beverage of the invention

The tea-based beverage of the invention is preferably made by combining 2 -16 mL of the tea juice with 150 - 200 ml of water. A cup full of a tea-based beverage generally measures about 150 - 200 mL. More preferably the amount of juice which is added to the water to make the beverage is in between 5 - 12 mL and most preferably in between 6 - 10 mL in 150 - 200 mL of water. The temperature of the water to which juice is added to make the tea-based beverage of the invention may be in between 5°C to 100°C depending on the consumer's need and taste preference.

### Preferable addition of alkaline agent

The process preferably includes a step of addition of an alkaline agent to the tea leaves at a mass ratio of 0.001:1 to 0.08:1 prior to or during the step of expressing the juice. The mass ratio of the alkaline agent to the fresh tea leaves is preferably 0.002:1 to 0.05:1, more preferably from 0.004:1 to 0.04:1 and most preferably from 0.005:1 to 0.03:1. It is particularly preferred that the mass ratio of the alkaline agent to the fresh tea leaves is less than 0.02:1.

When the process includes a step of pretreatment of fresh tea leaves including withering, maceration, fermentation or any combination thereof, the mass ratio is based on the mass of the fresh tea leaves before any pretreatment.

The alkaline agent is preferably selected from (i) a hydroxide, carbonate or bicarbonate of an alkali metal, alkaline earth metal or ammonium, (ii) a monobasic or dibasic phosphate of an alkali metal, or a mixture of (i) and (ii). The alkali metal is preferably sodium or potassium, more preferably sodium. More preferably, the alkaline agent is a monobasic or dibasic phosphate of an alkali metal. It is particularly preferred that the alkaline agent is disodium hydrogen phosphate or monosodium dihydrogen phosphate.

The pH of the juice after the expression step is preferably greater than 5.8, more preferably greater than 5.9 and most preferably greater than 6.

### Examples

Now the invention will be demonstrated with the help of examples which are for illustration only and do not limit the scope of the invention in any manner.

### HPLC method for measuring the theanine content

First the tea samples were freeze dried and then ground in a mortar and pestle. One gram of freeze dried tea sample was suspended in 100 ml of 70 °C water and allowed to cool to ambient temperature. One mL of suspension was centrifuged at 12000 x g for 15 min and the supernatant was used for analysis. Theanine was detected fluorimetrically following post column derivatization with Ortho-pthalaldehyde. A three pump HPLC system from Shimadzu with a fluorescence detector containing auto-sampler was used for the analysis. Five milli-molar (mM) perflurooctanoic acid in water was used as a mobile phase 'A' while 5 mM perfluorooctanoic acid in acetonitrile was used as mobile phase 'B'. One molar borate buffer (pH 10) containing 0.1% (w/v) O-pthalaldehyde was used as buffer 'C' for post column derivatisation with a constant flow of 1mL/min. The column used was Hypersil HyPURITY C18, 5µ, 15 cm x 4.6 cm (Phenomnex Cat. No CH0-4258) along with guard column from Phenomenex ®. Separation of theanine was achieved using gradient elution of mobile phase A and B. For the first 0 - 8 min, the concentration of mobile phase 'B' was 15%, subsequently increased to 30% in the next 1 min and maintained up to 11 min. At the 12th minute the concentration of mobile phase 'B' was increased from 30 to 90% and maintained up to 15 min. Finally, the gradient was brought to initial concentration within the next 2 min. Subsequently the column was equilibrated with mobile phase 'B' with a concentration of 15% for 15 min prior to next injection. The total flow of mobile phase 'A' and 'B' during gradient elution was 1 mL/min. The eluent from the column was fed into a low dead-volume 3-way junction and mixed with O-pthalaldehyde reagent in a 1:1 ratio. Derivatised theanine was detected in the fluorescence detector set at excitation wavelength of λ 340 nm and λ emission as 425 nm. Pure theanine obtained from Taiyo Kagaku Company from Japan was used as a standard.

### Method for measuring the aluminum content

0.50g of tea sample was taken in a silica crucible. The crucible was then put into a muffle furnace at a temperature of 550±10 °C for complete ash conversion for 3 hours. The furnace was then switched off and the crucible was left inside for one hour to cool. After that 5 ml of 3M Nitric acid was added into the crucible. The content was then heated at 60±5 °C on a hot plate for about 4 min. The acid extract was then transferred into a 25ml volumetric flask. The acid wash was repeated for 3 times and finally made up to the volume of the flask (25ml) with 3M Nitric acid. The flask was shaken to thoroughly mix the contents. The solution was then filtered and 1 ml of the filtrate was taken and diluted to 10 ml in a volumetric flask by using 3M nitric acid. The sample was then ready for ICP injection. The aluminum content was then measured using standard ICPOES (Inductive Coupled Plasma Optical Emission Spectrometry method).

### Comparison of sensorial properties

The sensorial properties of black tea made from regular plucked leaf and by the process of present invention were evaluated by Quantitative Descriptive Analysis (QDA) with five members. For this purpose, the black tea of the present invention was made from a tea leaf which comprised 100% by weight of tea material according to the invention.

It was found that in terms of colour appearance, aroma, flavour, taste, after taste and astringency there were no significant differences between black tea made by the process of the invention and black tea made from regular pluck.

### Effect of shoot length on the aluminum and theanine content

Tea material was collected from the Devershola plantation in the southern part of India 5 months after pruning the tea bushes. Nine examples were produced: Comparative Examples A, B and C had shoot lengths of < 6cm. Comparative Examples D, E and F had shoot lengths of > 16cm. Examples 1, 2 and 3 (according to the invention) had shoot lengths between 6 and 16cm. Table 1 shows the percentage of tea material, shoot length and number of shoots per kg for each example.

The tea leaf was withered at 25 °C in the open for 18 hours to bring the moisture of the leaves to 75-80%. The tea leaf was subjected to CTC 4 times to obtain macerated dhool. The macerated dhool was fermented (exposed to air at 25 °C) for 75 minutes. Then it was divided into two parts. One part was dried at a temperature of 120°C to get a black leaf tea product. Tea juice was squeezed out from the other part by a pneumatic press operating at a pressure of 6 kg/cm². The juice was centrifuged at 1500g in a REMI centrifugation machine, to separate the supernatant and residue. The black leaf tea product and the supernatant juice were then analyzed for their aluminum and theanine contents using the procedures described above. The results are summarized in Table 1.

**Table1**

| | | | | In the leaf tea | | In the tea juice | |
|---|---|---|---|---|---|---|---|
| Example Number | Wt% of tea material in the tea leaf | Shoot length (cm) | No. of shoots per kg | Al content (ppm) | Theanine content (wt %) | Al content (ppm) | Theanine content (mg/mL) |
| A | 100% | <6 | 1421.5 | 300 | 0.45 | 92.5 | 2 |
| B | 80% | <6 | 1385 | 460 | 0.5 | 122 | 2.1 |
| C | 50% | <6 | 1335.5 | 700 | 0.55 | 166 | 2.2 |
| 1 | 100% | 6-16 | 1000 | 500 | 2 | 139 | 5.2 |
| 2 | 80% | 6-16 | 1050 | 620 | 1.5 | 158.5 | 4.6 |
| 3 | 50% | 6-16 | 1125 | 800 | 1 | 189.5 | 3.8 |
| D | 100% | >16 | 625 | 1150 | 0.7 | 205 | 1.6 |
| E | 80% | >16 | 750 | 1220 | 0.69 | 212 | 1.78 |
| F | 50% | >16 | 937 | 1175 | 0.67 | 222.5 | 2.05 |

It is evident that leaf tea product and the juice of Examples 1, 2 and 3 have both a high theanine content and a low aluminum content. The tea products of the Comparative examples have low theanine contents. D, E and F additionally have a high aluminum content.

### Effect of alkali treatment on the aluminum and theanine content of tea juice

Tea material was collected from the Devershola plantation in the southern part of India 5 months after pruning the tea bushes. Four further examples were produced: Comparative Examples G and H had shoot lengths of < 6cm and > 16cm respectively. Examples 4 and 5 (according to the invention) had shoot lengths between 6 and 16cm. Table 2 shows the percentage of tea material, shoot length and number of shoots per kg for each example.

Macerated dhool was produced as described above and then fermented (exposed to air at 25 °C) for 60 minutes. Disodium hydrogen phosphate (DHP) was then added, in the mass ratios given in Table 2. After a further 15 minutes of fermentation in the presence of DHP, the juice was squeezed out from the dhool by a pneumatic press operating at a pressure of 6 kg/cm². The juice obtained (about 50 mL) was centrifuged at 1500g in a REMI centrifugation machine, to separate the supernatant from the residue. The supernatant was then analyzed for its aluminum and theanine contents.

**Table 2**

| | | | | | In the tea juice | |
|---|---|---|---|---|---|---|
| Example Number | Mass ratio | Wt% of tea material in the tea product | Shoot length (cm) | No. of shoots per kg | Al content (ppm) | Theanine content (mg/mL) |
| G | 0.008 | 100% | <6 | 1421 | 72 | 1.8 |
| 4 | 0.008 | 100% | 6-16 | 1000 | 105 | 4 |
| H | 0.008 | 100% | >16 | 625 | 145 | 2 |
| 7 | 0.013 | 100% | 6-16 | 1150 | 23 | 3.2 |

It is clear that addition of the alkaline agent in the fermentation process produced a tea juice with much lower aluminum content while theanine content was maintained at a high level. Furthermore increasing the amount of the alkaline agent reduced the aluminum content while maintaining the high theanine content.

## Claims

1. A process for preparation of a tea product from tea leaf **characterized in that** the tea leaf comprises at least 40% by weight of tea material which is harvested during the rejuvenation stage of tea bush after pruning with shoot length of 6-16 cm and having 750 - 1200 shoots per kg of the tea leaf.

2. A process for preparation of a tea product as claimed in claim 1 wherein the process comprises a step of thermal deactivation of the enzymes of the tea leaf to obtain green leaf tea.

3. A process for preparation of a tea product as claimed in claim 1 wherein the process comprises the steps of:
a. subjecting the tea leaf to Crush, Tear and Curl or rolling
b. fermentation of the macerated tea leaf, and
c. drying the tea leaf to obtain black tea.

4. A process for preparation of a tea product as claimed in claim 1 wherein the process comprises the step of squeezing out juice from the tea leaf to produce leaf residue and tea juice.

5. A process as claimed in claim 4 wherein there are initial steps of maceration and fermentation of the tea leaf before the step of squeezing.

6. A process as claimed in claim 4 or claim 5 wherein an alkaline agent is added to the tea leaf at a mass ratio of 0.001:1 to 0.08:1 prior to or during the step of expressing the juice.

7. A process as claimed in claim 6 wherein the alkaline agent is selected from (i) a hydroxide, carbonate or bicarbonate of an alkali metal, alkaline earth metal or ammonium, (ii) monobasic or dibasic phosphate of an alkali metal, or a mixture of (i) and (ii).

8. A process as claimed in any one of the preceding claims wherein the tea material is obtained from a tea plant within 7 months from pruning.

9. A tea product comprising:
a) 150 - 900 mg of aluminum per kg of tea product; and
b) 0.75 - 4 % of theanine on dry weight basis.

10. A liquid tea juice comprising;
a) 10 - 200 ppm of aluminum; and
b) 3 - 6 mg of theanine per mL.

11. A tea-based beverage comprising the tea juice of claim 10 wherein the beverage has a total aluminum content of less than 9 ppm; and a theanine content of 0.03 - 0.65 mg per mL.

## Patentansprüche

1. Verfahren zur Herstellung eines Teeproduktes aus Teeblättern, **dadurch gekennzeichnet, dass** die Teeblätter mindestens 40 Gew.-% Teematerial umfassen, welches während des Verjüngungsstadiums des Teestrauchs nach dem Schneiden mit Trieblängen von 6 bis 12 cm und mit 750 bis 1200 Trieben pro kg der Teeblätter geerntet wird.

2. Verfahren zur Herstellung eines Teeproduktes gemäß Anspruch 1, wobei das Verfahren einen Schritt der thermischen Deaktivierung der Enzyme der Teeblätter umfasst, um Blätter vom Grünen Tee zu erhalten.

3. Verfahren zur Herstellung eines Teeproduktes gemäß Anspruch 1, wobei das Verfahren die Schritte umfasst von:
a. Unterwerfen der Teeblätter der Zerkleinerung, dem Zerreißen und dem Kräuseln oder Walzen
b. Fermentieren der zerkleinerten Teeblätter und
c. Trocknen der Teeblätter, um schwarzen Tee zu erhalten.

4. Verfahren zur Herstellung eines Teeproduktes gemäß Anspruch 1, wobei das Verfahren den Schritt des Auspressens von Saft aus den Teeblättern, um Blattrückstand und Teesaft herzustellen, umfasst.

5. Verfahren gemäß Anspruch 4, wobei vor dem Schritt des Auspressens anfängliche Schritte des Zerkleinerns und des Fermentierens der Teeblätter stattfinden.

6. Verfahren gemäß Anspruch 4 oder 5, wobei ein alkalisches Mittel den Teeblättern mit einem Massenverhältnis von 0,001 bis 0,08 vor oder während des Schrittes des Auspressens des Saftes zugesetzt wird.

7. Verfahren gemäß Anspruch 6, wobei das alkalische Mittel aus (i) einem Hydroxid, Carbonat oder Bicarbonat eines Alkalimetalls, Erdalkalimetalls oder von Ammonium, (ii) einbasischem oder zweibasischem Phosphat eines Alkalimetalls oder einer Mischung von (i) und (ii) ausgewählt ist.

8. Verfahren gemäß irgendeinem der vorhergehenden Ansprüche, wobei das Teematerial von einer Teepflanze innerhalb von 7 Monaten nach dem Beschneiden erhalten wird.

9. Teeprodukt umfassend:
a) 150 bis 900 mg Aluminium pro kg Teeprodukt; und
b) 0,75 bis 4% Theanin, bezogen auf das Trockengewicht.

10. Flüssiger Teesaft umfassend:
a) 10 bis 200 ppm Aluminium; und
b) 3 bis 6 mg Theanin pro ml.

11. Getränk auf Grundlage von Tee, umfassend den Teesaft von Anspruch 10, wobei das Getränk einen gesamten Aluminiumgehalt von weniger als 9 ppm sowie einen Theaningehalt von 0,03 bis 0,65 mg pro ml aufweist.

## Revendications

1. Procédé de préparation d'un produit de thé à partir d'une feuille de thé **caractérisé en ce que** la feuille de thé comprend au moins 40 % en poids de matériau de thé qui est récolté au cours du stade de régénération du théier après la taille présentant une longueur des pousses de 6 à 16 cm et comportant de 750 à 1 200 pousses par kg de feuille de thé.

2. Procédé de préparation d'un produit de thé tel que revendiqué dans la revendication 1, lequel procédé comprend une étape de désactivation thermique des enzymes de la feuille de thé pour obtenir un thé en feuilles vertes.

3. Procédé de préparation d'un produit de thé tel que revendiqué dans la revendication 1, lequel procédé comprend les étapes suivantes :
a. broyage, déchiquetage et bouclage ou roulage de la feuille de thé
b. fermentation de la feuille de thé macérée, et
c. séchage de la feuille de thé pour obtenir un thé noir.

4. Procédé de préparation d'un produit de thé tel que revendiqué dans la revendication 1, lequel procédé comprend l'étape d'extraction de jus par écrasement de la feuille de thé pour produire un résidu foliaire et un jus de thé.

5. Procédé tel que revendiqué dans la revendication 4 dans lequel il existe des étapes initiales de macération et de fermentation de la feuille de thé avant l'étape d'écrasement.

6. Procédé tel que revendiqué dans la revendication 4 ou la revendication 5 dans lequel un agent alcalin est ajouté à la feuille de thé à un rapport massique de 0,001/1 à 0,08/1 avant ou pendant l'étape d'expression du jus.

7. Procédé tel que revendiqué dans la revendication 6 dans lequel l'agent alcalin est choisi parmi (i) un hydroxyde, un carbonate ou un bicarbonate d'un métal alcalin, d'un métal alcalino-terreux ou d'ammonium, (ii) un phosphate monobasique ou dibasique d'un métal alcalin, ou un mélange de (i) et (ii).

8. Procédé tel que revendiqué dans l'une quelconque des revendications précédentes dans lequel le matériau de thé est obtenu à partir d'un arbre à thé dans les 7 mois qui suivent la taille.

9. Produit de thé comprenant :
a) de 150 à 900 mg d'aluminium par kg de produit de thé ; et
b) de 0,75 à 4 % de théanine sur la base de la matière sèche.

10. Jus de thé liquide comprenant ;
a) de 10 à 200 ppm d'aluminium ; et
b) de 3 à 6 mg de théanine par ml.

11. Boisson à base de thé comprenant le jus de thé selon la revendication 10, laquelle boisson a une teneur totale en aluminium inférieure à 9 ppm ; et une teneur en théanine de 0,03 à 0,65 mg par ml.
